# FASCICULE DE BREVET EUROPEEN

(11) **EP 1 102 015 B1**
(45) Date de publication et mention de la délivrance du brevet: **14.04.2004**
(21) Numéro de dépôt: 00402815.5
(22) Date de dépôt: 12.10.2000
(51) Int. Cl.: F24F 13/28, B01D 46/24

(54) **Dispositif de connexion étanche d'un filtre de ventilation**
Dichte Verbindung für einen Belüftungsfilter
Seal connecting device for ventilation filter

(30) Priorité: 18.11.1999 FR 9914487
(43) Date de publication de la demande: 23.05.2001
(73) Titulaire: COMPAGNIE GENERALE DES MATIERES NUCLEAIRES, 78140 Velizy Villacoublay (FR)
(72) Inventeur: Defontaine, Bernard, 78310 Maurepas (FR)
(74) Mandataire: Cardy, Sophie

(56) Documents cités:
- US-A- 4 334 900
- US-A- 4 498 914
- US-A- 5 545 241

## Description

La présente invention a pour objet un dispositif de connexion étanche de filtres de ventilation intervenant notamment dans l'industrie nucléaire. Un tel dispositif est connu du brevet US-A-4 334 900.

Elle concerne plus précisément un tel dispositif intervenant plus particulièrement en milieu hostile sur un circuit de ventilation.

De nombreux filtres, avec média filtrant, interviennent dans l'industrie nucléaire pour la filtration de gaz contaminés, par exemple sur les circuits internes de ventilation des enceintes de confinement. On connaît notamment les filtres THE (à très haute efficacité) et les filtres HE (haute efficacité).

De tels filtres doivent être montés de façon étanche. Tout le gaz contaminé doit leur passer au travers.

Ils sont généralement disposés de façon serré dans un carter, avec intervention d'un système d'étanchéité : joints...

Selon l'art antérieur, ces filtres sont par exemple montés dans ledit carter sur une platine, et plaqués sur la bride du circuit de ventilation.

Ce placage, qui assure l'étanchéité, est assuré par l'intermédiaire de ressorts qui exercent une poussée importante sur ladite platine.

Ce placage ne suffit toutefois pas à assurer la tenue au séisme.

Ce dispositif connu de connexion des filtres présente des inconvénients majeurs.

Il convient, d'une part, pour que la connexion étanche soit réalisée, que l'effort de placage du filtre sur la bride soit important.

Or, cet effort est généralement à exercer par l'intermédiaire de pinces ou télémanipulateurs.

De plus, lors de l'opération de remplacement du filtre -opération généralement réalisée, elle aussi, par télémanipulation- le filtre doit être rentré en force dans le carter, entre la bride du circuit et la platine.

Ceci implique une détérioration par frottement de son système d'étanchéité : joints à sa périphérie...

Selon l'invention, on propose un nouveau dispositif de connexion étanche qui pallie à ces inconvénients. Ledit dispositif peut être considéré comme un perfectionnement du système présenté ci-dessus, faisant intervenir une platine sous tension, par l'intermédiaire de ressorts.

Le dispositif selon l'invention comporte :
- un carter cylindrique destiné à recevoir ledit filtre, fixé sur la bride du circuit de ventilation à sa deuxième extrémité et à une première extrémité duquel est montée une contre-bride maintenue de façon élastique sous tension axiale par des moyens de maintien sous tension ;
- un fourreau coaxial à et solidaire dudit carter, autour duquel coulisse axialement de manière étanche ladite contre-bride, sur lequel sont disposés lesdits moyens de maintien sous tension et auquel sont solidarisés trois galets fixes faisant saillie vers l'extérieur dudit fourreau ;
- une came, entourant sur une certaine longueur ledit fourreau, constituée d'un anneau à triple rampe en forme de tronçon d'hélice, lesdites rampes logeant respectivement les galets, un mouvement de rotation de ladite came commandant la translation axiale de ladite contre-bride ; et
- des moyens pour la mise en rotation de ladite came.

La rotation de ladite came à rampes, enserrant les trois galets liés au fourreau fixe, induit son coulissement vers la première extrémité du carter et après rattrapage d'un certain jeu, celui de la contre-bride.

L'escamotage de la contre-bride qui s'en suit -par coulissement de celle-ci vers la première extrémité du carter ; en fait, par écrasement des moyens la maintenant sous tension- permet la mise en place d'un filtre neuf, sans frottement rédhibitoire de ses joints d'étanchéité.

Une fois le filtre neuf mis en place, la rotation de la came dans l'autre sens -qui induit son coulissement vers la deuxième extrémité du carter - « libère » la contre-bride qui vient plaquer ledit filtre contre la bride. Les moyens de maintien de la contre-bride sous tension axiale exercent la force de poussée adéquate.

Lesdits moyens peuvent consister en des ressorts précontraints et avantageusement en des rondelles ressorts précontraints disposées contre une première extrémité de la contre-bride.

Le dispositif selon l'invention permet, par le biais de la came démultiplicatrice d'effort, de concilier la faible capacité des pinces ou télémanipulateurs utilisés, avec la nécessité d'effort de placage important du filtre sur la bride du circuit de ventilation. Cet effort de placage rendu plus important que dans l'art antérieur améliore à la fois l'étanchéité du circuit et la tenue du filtre au séisme.

Il est évident que le dispositif selon l'invention peut, de la même façon, être aisément manipulé à la main, au travers d'une boîte à gants.

Un tel dispositif est donc aisément manipulable à distance ; son intervention permet à la fois d'assurer l'étanchéité du circuit et la tenue du filtre au séisme. Enfin, un tel dispositif se caractérise par sa compacité.

On notera qu'avantageusement le fourreau du dispositif selon l'invention comporte à sa première extrémité un embout cylindrique qui permet l'extension éventuelle du circuit de ventilation par intervention d'une bride de raccord.

L'invention va maintenant être décrite en référence aux figures annexées sur lesquelles :
- la figure 1 est une vue de face, avec coupe partielle selon la direction I-I de la figure 2, du dispositif selon l'invention ;
- la figure 2 est une vue de dessus dudit dispositif en coupe selon la direction II-II de la figure 1 ;
- la figure 3 est une autre vue de face partielle du dispositif montrant les chemins de roulement, c'est-à-dire les rampes, des galets présents sur la came.

Sur ces figures, est visible l'étrier 1 ou carter cylindrique d'axe vertical dans lequel doit être logé de façon étanche un filtre 2. Ledit filtre 2 comporte un système d'étanchéité 3, par exemple par joint torique, au niveau de ses faces d'appui. Il est bien entendu que la direction de l'axe du carter pourrait être horizontale ou oblique sans modifier pour autant le fonctionnement du dispositif selon l'invention.

Pour le bon positionnement et la manutention du filtre 2 dans le carter 1, on réalise la manoeuvre manuellement ou à l'aide d'un outil tel qu'une une pince à ressort.

La mise en place dudit filtre 2 se fait après débrayage du dispositif selon l'invention.

La partie haute, ou deuxième extrémité, de l'étrier ou carter 1 est fixée sur la bride 4 d'un circuit de ventilation.

En partie basse, ou première extrémité, dudit carter 1 est montée la contre-bride 5. Celle-ci est, en fait, constituée d'un plateau supérieur 5' et d'un plateau inférieur 5", solidarisés par l'intermédiaire d'éléments formant entretoises.

Ladite contre-bride 5 est maintenue sous tension verticale grâce aux rondelles ressorts précontraints 6, ancrées verticalement sur le fourreau 7 sous la contre-bride 5.

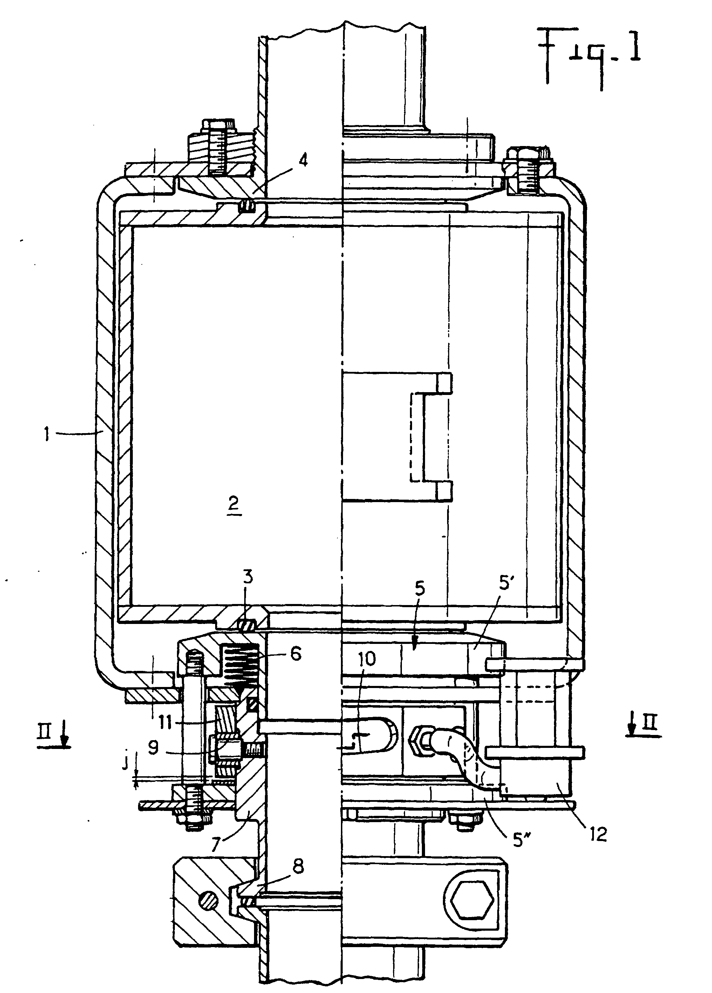

Ledit fourreau 7 est vissé de manière coaxiale au carter 1. Il comporte un embout 8 cylindrique annulaire pour l'extension éventuelle du circuit de ventilation (vers le bas sur la figure 1). Sur ledit fourreau 7, sont montés trois vis de fixation pour des galets 9 faisant saillie horizontalement radialement vers l'extérieur dudit fourreau 7. Lesdits galets 9 sont logés dans les rampes hélicoïdales 10 débouchantes de la came 11.

Le dispositif de manoeuvre 12 de ladite came 11 comprend un levier indexable et télémanipulable.

Celui-ci peut être solidarisé au plateau inférieur 5" de la contre-bride 5 par l'intermédiaire d'un doigt de positionnement.

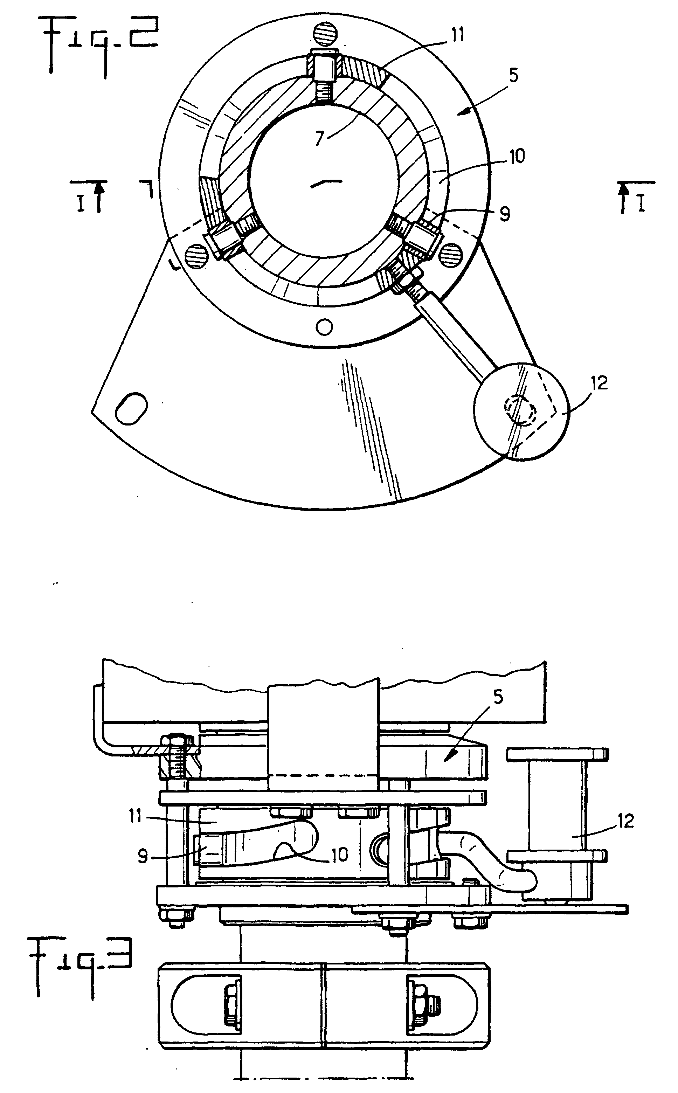

On comprend que la rotation de la came 11 dans un sens adéquat (sens horaire sur la figure 2) va la faire descendre. Après rattrapage du jeu j, ladite came 11 va appuyer sur le plateau inférieur 5" de la contre-bride 5 entraînant celle-ci vers le bas, par écrasement des ressorts 6. Le changement de filtre peut alors s'opérer aisément sans frottement gênant au niveau des joints 3.

A titre illustratif, on peut préciser qu'un filtre THE d'environ 1 kg est soumis dans le dispositif selon l'invention à une poussée verticale d'environ 343 N (35 kgf).

Un tel dispositif permet notamment d'assurer par télémanipulation la connexion étanche des filtres THE sur les circuits internes de ventilation des enceintes de confinement « en dépression ».

Son originalité réside à la fois dans sa compacité et dans sa capacité à s'affranchir en grande partie, au niveau de la télémanipulation, de l'effort important d'application du filtre sur la bride du circuit de ventilation, effort jusqu'alors nécessaire à l'obtention indispensable d'une connexion étanche.

En effet, on comprend que l'effort nécessaire pour escamoter ou remettre en position de placage la contre-bride est réduit grâce à la démultiplication créée par les rampes de la came et à l'effet de levier du dispositif de manoeuvre commandant la rotation de la came.

## Revendications

1. Dispositif de connexion étanche d'un filtre de ventilation (2), intervenant notamment dans l'industrie nucléaire, sur un circuit de ventilation en particulier en milieu hostile, **caractérisé en ce qu'**il comporte :
- un carter cylindrique (1) destiné à recevoir ledit filtre (2), fixé sur la bride (4) du circuit de ventilation à sa deuxième extrémité et à une première extrémité duquel est montée une contre-bride (5) maintenue de façon élastique sous tension axiale par des moyens de maintien sous tension ;
- un fourreau 7 coaxial à et solidaire dudit carter (1), autour duquel coulisse axialement de manière étanche ladite contre-bride (5), sur lequel sont disposés lesdits moyens de maintien sous tension (6) et auquel sont solidarisés trois galets fixes (9) faisant saillie vers l'extérieur dudit fourreau (7) ;
- une came (11), entourant sur une certaine longueur ledit fourreau (7), constituée d'un anneau à triple rampe (10) en forme de tronçon d'hélice, lesdites rampes (10) logeant respectivement les galets (9), un mouvement de rotation de ladite came (11) commandant la translation axiale de ladite contre-bride (5) ; et
- des moyens pour la mise en rotation de ladite came (11).

2. Dispositif selon la revendication 1, **caractérisé en ce que** les moyens de maintien sous tension axiale de ladite contre-bride (5) comprennent des rondelles ressorts précontraints (6) disposées contre une première extrémité de la contre-bride (5).

3. Dispositif selon l'une des revendications 1 ou 2, **caractérisé en ce que** ledit fourreau (7) comporte à sa première extrémité un embout (8) cylindrique, pour l'extension éventuelle du circuit de ventilation.

## Patentansprüche

1. Vorrichtung zum dichten Anschließen eines vor allem in der Kernindustrie vorkommenden Belüftungsfilters (2) an einen Belüftungskreis insbesondere in feindlicher Umgebung, **dadurch gekennzeichnet, dass** sie folgendes umfasst:
- ein zylindrisches Gehäuse (1) zur Aufnahme des Filters (2), das an seinem zweiten Ende an dem Flansch (4) des Belüftungskreises befestigt ist und an einem ersten Ende dessen ein Gegenflansch (5) angebracht ist, der durch Mittel zum Halten unter Spannung auf elastische Weise unter axialer Spannung gehalten ist;
- eine zu dem Gehäuse (1) koaxiale und mit diesem fest verbundene Buchse (7), um die der Gegenflansch (5) auf dichte Weise axial gleitet, an der die Mittel (6) zum Halten unter Spannung angeordnet sind und mit der drei feste, zur Außenseite der Buchse (7) vorspringende Rollen (9) fest verbunden sind;
- eine die Buchse (7) über eine gewisse Länge umgebende Kurve (11), die von einem Ring mit dreifacher, schraubenabschnittförmiger Rampe (10) gebildet ist, wobei die Rampen (10) jeweils die Rollen (9) lagern, wobei eine Drehbewegung der Kurve (11) die axiale Verschiebung des Gegenflansches (5) steuert; und
- Mittel, um die Kurve (11) in Rotation zu versetzen.

2. Vorrichtung nach Anspruch 1, **dadurch gekennzeichnet, dass** die Mittel, um den Gegenflansch (5) unter axialer Spannung zu halten, vorgespannte Federringe (6) aufweisen, die an einem ersten Ende des Gegenflansches (5) angeordnet sind.

3. Vorrichtung nach einem der Ansprüche 1 oder 2, **dadurch gekennzeichnet, dass** die Buchse (7) an ihrem ersten Ende einen zylindrischen Ansatz (8) für die eventuelle Erweiterung des Belüftungskreises aufweist.

## Claims

1. A sealed connection device for a ventilation filter (2) for use on a ventilation circuit in particular in a hostile environment and in particular in the nuclear industry, the device being **characterised in that** it comprises:
· a cylindrical housing (1) designed to receive said filter (2), the housing being fixed at a second end to a ventilation circuit flange (4) and having a first end mounted on a companion flange (5), the companion flange (5) being held in resilient manner under axial tension by holding means under tension;
· a sheath (7) coaxial with and secured to said housing (1), about which sheath (7) said companion flange (5) slides axially in sealed manner, on which sheath (7) there are disposed said holding means under tension (6), and to which sheath (7) there are secured three fixed wheels (9) projecting outwards therefrom;
· a cam (11) surrounding said sheath (7) over a certain length and constituted by a ring having three ramps (10) each in the form of a helical segment, said ramps (10) receiving respective ones of the wheels (9), turning of said cam (11) causing said companion flange (5) to move in axial translation; and
· means for turning said cam (11).

2. A device according to claim 1, **characterised in that** the holding means under axial tension of said companion flange (5) comprise prestressed spring washers (6) disposed against a first end of the companion flange (5).

3. A device according to claim 1 or 2, **characterised in that** said sheath (7) includes a cylindrical rim (8) at its first end to enable the ventilation circuit to be eventually extended.
